# FASCICULE DE BREVET EUROPEEN

(11) **EP 2 307 270 B1**
(45) Date de publication et mention de la délivrance du brevet: **15.05.2013**
(21) Numéro de dépôt: 09802561.2
(22) Date de dépôt: 31.07.2009
(51) Int. Cl.: B64C 1/00, B64C 25/00

(54) **PANNEAU DE PROTECTION ET TRAIN D'ATTERRISSAGE LE COMPORTANT**
STEINSCHLAGSCHUTZPANEEL SOWIE EIN FLUGZEUGFAHRWERK MIT EINER SOLCHEN SCHUTZVORRICHTUNG
PROTECTION PANEL AND LANDING GEAR INCLUDING SAME

(30) Priorité: 31.07.2008 FR 0855310
(43) Date de publication de la demande: 13.04.2011
(73) Titulaire: AIRBUS OPERATIONS, 31060 Toulouse (FR)
(72) Inventeur: DERVAULT Franck, F-31830 Plaisance du Touch (FR)
(74) Mandataire: Petit, Maxime
(86) Numéro de dépôt international: PCT/FR2009/000966
(87) Numéro de publication internationale: WO 2010/012913

(56) Documents cités:
- EP-A- 0 354 403
- EP-A- 1 464 915
- EP-A- 1 607 272
- WO-A-2005/100152
- WO-A-2008/015360
- FR-A- 2 871 725
- GB-A- 2 022 212
- GB-A- 2 346 117
- US-A- 4 460 205

## Description

La présente invention concerne un panneau de protection et un module de train d'atterrissage le comportant. Elle vise à réduire le poids d'un panneau de protection et à améliorer la tenue aux impacts, notamment aux impacts pneu sur un panneau barque. Elle s'applique ainsi, en particulier, au domaine aéronautique.

Pour les avions de type connu, le panneau barque, positionné à l'arrière d'un train d'atterrissage et protégeant le fuselage des débris et cailloux soulevés par le roulement des pneus lors du décollage ou de l'atterrissage, est en aluminium et dispose donc d'un coefficient d'allongement à rupture, c'est-à-dire le taux de l'allongement maximum avant rupture, de 9 %. Du fait de la présence de cadres avec retour à la peau en aluminium, qui sont très rigides, lorsque l'on a un impact entre deux cadres, on ne sollicite que la peau sur une distance entre les cadres concernés et on maximise donc l'élongation sur le panneau puisque les cadres n'offrent pas de latitude en déformation radiale.

Cependant, ce panneau métallique est lourd et ne répond donc pas aux besoins actuels d'alléger les avions.

On connait d'après EP 1 607 272 un composant absorbant l'énergie issue d'un impact, comportant un cadre et une partie fixée au cadre dont la section est réalisée dans un matériau composite à fibres multiaxiales.

GB 2 346 117 présente une poche en matériaux composites comprenant un rail et un pare-chocs, la poche comprenant une cavité permettant à l'ensemble de s'écraser pour absorber l'énergie issue d'un impact.

GB 2 022 212 décrit un pare-chocs de véhicule en matériaux composites attaché à une partie rigide à travers des éléments aptes, d'une part, à se déformer élastiquement lorsque soumis à une contrainte issue d'un impact et, d'autre part, à retrouver leur position initiale lorsque la charge est retirée.

US 4 460 205 décrit un ensemble pour pare-chocs de véhicule en matériaux composite comprenant deux éléments de fixation rigides comportant des plaques rectangulaires et des moyens d'absorption d'énergie fixés aux faces des plaques.

La présente invention vise à remédier à ces inconvénients. A cet effet, la présente invention vise un ensemblede protection pour véhicule conforme à la revendication 1.

Grâce à ces dispositions, on bénéficie, de la légèreté du matériau composite. En cas d'impact, la déformation des pièces déformables permet, par rapport aux supports rigides des panneaux en aluminium de l'art antérieur, une extension de la déformation de la surface extérieure sur une grande étendue, ce qui, malgré le faible coefficient d'allongement à rupture (typiquement de moins de 2 %), améliore la tenue aux impacts. Le faible coefficient d'allongement à rupture est ainsi compensé par l'incorporation de pièce déformables. Les pièces déformables forment ainsi des pièces « fusibles » lors de l'impact.

Selon des caractéristiques particulières, lesdites pièces déformables prennent la forme de clips.

Selon des caractéristiques particulières, ledit matériau composite est du CFRP (acronyme de « *carbon fibre reinforced plastic* » pour plastique renforcé par fibres de carbone).

Selon des caractéristiques particulières, ledit support est rigide.

Selon des caractéristiques particulières, les pièces déformables se reprennent sur plusieurs pièces de rigidification du support. Ces pièces de rigidification sont appelées « lisses » ou « cadres ».

Selon des caractéristiques particulières, les pièces déformables sont perpendiculaires à la surface externe du panneau et adaptées à flamber sous l'effet des impacts.

En effet, l'augmentation de hauteur permet de rendre les pièces déformables nettement moins résistantes à des charges de compression perpendiculaires au fuselage et flambent donc sous l'impact. Cela permet alors de solliciter la surface externe du panneau, ou « peau » en flexion hors plan, par exemple sur trois intervalles entre les éléments de rigidification, au lieu d'un seul dans l'art antérieur.

Selon un deuxième aspect, la présente invention vise un module de train d'atterrissage caractérisé en ce qu'il comporte un train d'atterrissage et un panneau de protection objet de la présente invention, tel que succinctement exposé ci-dessus.

Selon un troisième aspect, la présente invention vise un aéronef, caractérisé en ce qu'il comporte au moins un module de train d'atterrissage tel que succinctement exposé ci-dessus.

Les avantages, buts et caractéristiques particulières de ce module étant similaires à ceux du panneau objet de la présente invention, tel que succinctement exposé ci-dessus, ils ne sont pas rappelés ici.

D'autres avantages, buts et caractéristiques particulières de la présente invention ressortiront de la description qui va suivre faite, dans un but explicatif et nullement limitatif, en regard des dessins annexés, dans lesquels :
- la figure 1 représente, schématiquement, un mode de réalisation particulier du module de train d'atterrissage objet de la présente invention ;
- la figure 2 représente, schématiquement et en coupe, une déformation de panneau obtenue par la mise en oeuvre de la présente invention ;
- la figure 3 représente, schématiquement et en coupe, un mode de réalisation particulier du panneau de protection objet de la présente invention ; et
- la figure 4 représente, schématiquement et partiellement, en perspective, un mode de réalisation particulier du panneau de protection objet de la présente invention.

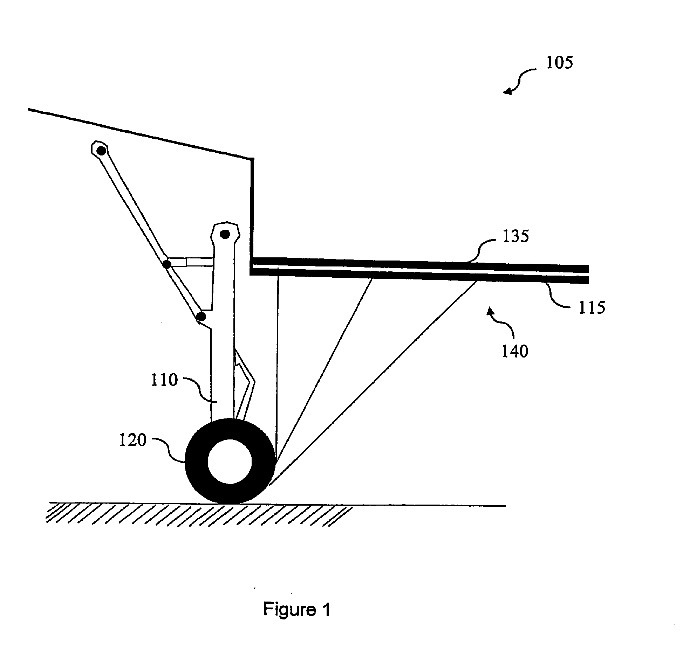

On observe, en figure 1, un module 105 de train d'atterrissage comportant un train d'atterrissage 110 et un panneau de protection 115, aussi appelé « panneau barque ». L'avant de l'avion étant sur la gauche de la figure 1, on comprend que lors du roulement, au décollage ou à l'atterrissage, les pneus 120 du train 110 peuvent soulever des débris ou des cailloux et les projeter, à l'arrière, vers le fuselage de l'avion. Le panneau de protection 115 est destiné à protéger le fuselage de ces impacts.

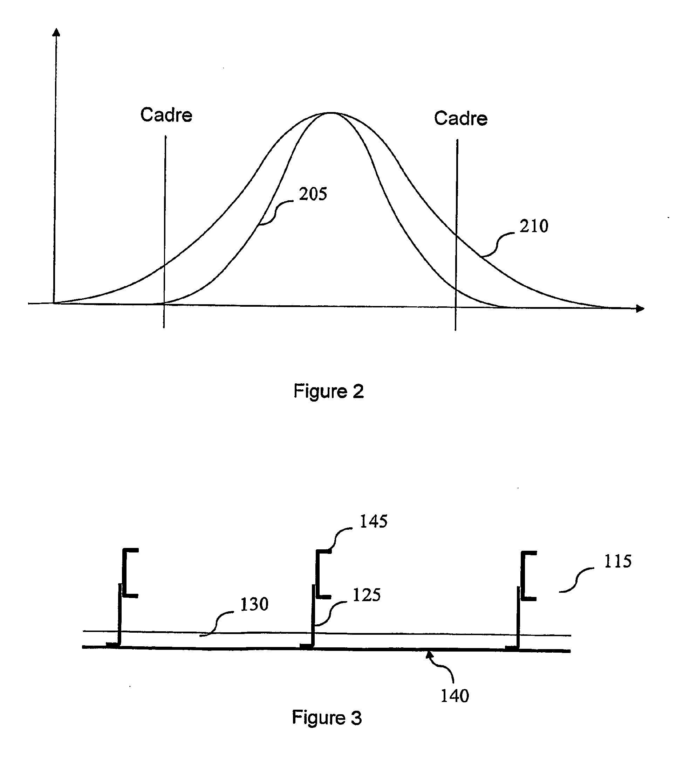

Conformément à la présente invention et comme illustré en figure 3, la surface externe 140 du panneau de protection 115 est essentiellement en matériau composite, par exemple en CFRP obtenu par machine à placement automatique de fibres dans lequel on place les plis couche à couche en utilisant une machine qui les place par bandelette. De plus, ce panneau possède des pièces déformables 125 entre la surface externe 130, ou « peau » du panneau 115 et un support rigide 135 formant structure du panneau et lié à la structure de l'avion. Le support rigide 135 comporte des cadres internes 145 rigides.

Les pièces déformables 125 sont perpendiculaires à la surface externe 140 du panneau de protection 115 et sont adaptées à flamber sous l'effet des impacts.

Les pièces déformables présentent un taux de déformation (en longueur de déformation par unité de force appliquée) adapté au coefficient d'allongement de rupture de la surface externe afin que plusieurs pièces déformables se déforment avant que la surface externe ne se rompe. En d'autres termes, la force de rupture de la surface externe correspond à un multiple de la force qui suffit à la déformation d'une pièce déformable, le multiple considéré étant d'autant plus élevé que le coefficient d'allongement de rupture de la surface externe est faible. Par exemple, lorsque le coefficient d'allongement de rupture est divisé par deux, ce multiple est doublé.

Les pièces déformables 125 permettent ainsi une extension de la zone du panneau qui est déformée en cas d'impact, par rapport aux structures rigides des panneaux barques métalliques de type connu. Pour que ces pièces déformables 125 puissent se déformer dans l'épaisseur du panneau de protection 115, celui-ci est plus épais que les panneaux barques traditionnels en aluminium.

Ainsi, le faible allongement à rupture du matériau composite de la peau, inférieur à 2% dans le cas du CFRP, est compensé par un épaississement important du panneau de protection 115 permettant la déformation des pièces déformables 125.

La figure 2 représente des courbes de déformation de la surface externe du panneau de protection, pour une peau en aluminium, courbe 205, et pour un panneau objet de la présente invention, courbe 210.

On observe que, pour le même enfoncement de la peau :
- la courbe 205 représente une extension de la déformation limitée sensiblement à la longueur d'un intervalle entre deux cadres 215, alors que
- la courbe 210 représente une extension de la déformation sur trois intervalles entre les cadres 215.

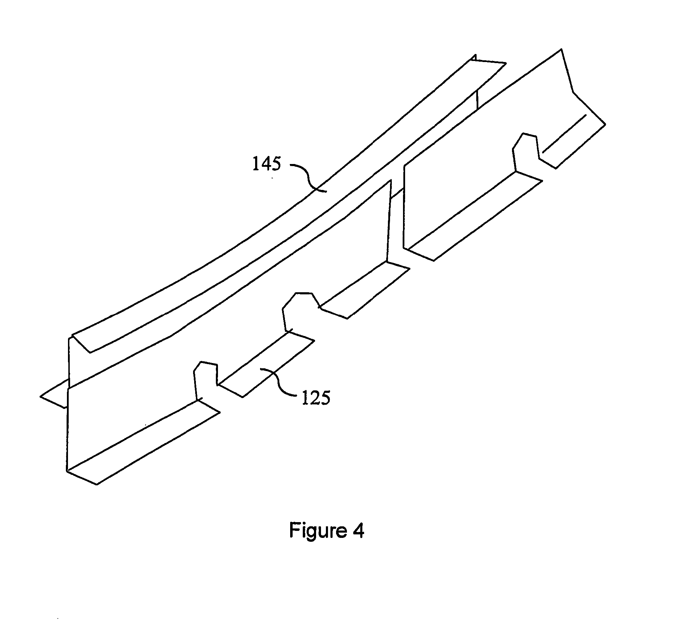

La figure 4 illustre un type d'arrangement respectif de la surface externe 140, des pièces déformables 125 et des cadres 145. Les pièces déformables 125 prennent ici la forme de clips perpendiculaires à la surface externe 140. Dans le cas représenté en figure 4, les cadres 145 sont adaptés à supporter des lisses (non représentées).

Les clips 125, se reprenant sur plusieurs pièces de rigidification (cadres 145 ou lisses) du panneau 115, forment des pièces fusibles lors de l'impact. Les clips 125 sont faiblement résistants à des charges de compression perpendiculaires à la surface externe 140 et flambent donc sous l'impact. Comme exposé en regard de la figure 2, cela permet de solliciter la peau en flexion hors plan sur trois inter-cadres ou inter-lisses et donc de réduire fortement le taux d'élongation de la peau et, par conséquent, son risque de rupture.

On observe, en figures 3 et 4, que les cadres flottants 145 passent largement au dessus de la surface externe 140. Par rapport aux panneaux métalliques de l'art antérieur, on passe ainsi de cinq millimètres de jeu à 25, voire 35 millimètres de distance entre la peau et les cadres.

## Revendications

1. Ensemble de protection pour véhicule, comprenant un panneau de protection (115), un support (135) lié à la structure du véhicule et des pièces déformables (125) par lesquelles le panneau de protection est monté sur le support, **caractérisé en ce que** la surface externe (140) du panneau de protection (115) comporte au moins un matériau composite et **en ce que**,les pièces déformables (125) se reprenant sur plusieurs pièces de rigidification (145) dudit support, le taux de déformation des dites pièces déformables est adapté au coefficient d'allongement de rupture de la surface externe afin que plusieurs dites pièces déformables se déforment avant que la surface externe ne se rompe.

2. Ensemble de protection selon la revendication 1, **caractérisé en ce que** lesdites pièces déformables (125) se reprennent sur plusieurs cadres.

3. Ensemble de protection selon l'une quelconque des revendications 1 ou 2, **caractérisé en ce que** lesdites pièces déformables (125) se reprennent sur plusieurs lisses supportées par des cadres.

4. Ensemble de protection (115) selon l'une quelconque des revendications 1 à 3, **caractérisé en ce que** ledit matériau composite est du CFRP (acronyme de « carbon fibre reinforced plastic » pour plastique renforcé par fibres de carbone).

5. Ensemble de protection selon l'une quelconque des revendications 1 à 4, **caractérisé en ce que** les pièces déformables (125) comportent une base parallèle à la surface externe (140) et une partie s'étendant perpendiculairement à la base en éloignement de celle-ci.

6. Ensemble de protection selon l'une quelconque des revendications 1 à 4, **caractérisé en ce que** les pièces déformables (125) comportent une base parallèle à la surface externe et une partie s'étendant perpendiculairement à la base en éloignement de celle-ci et sont adaptées à flamber sous l'effet des impacts sur la surface externe du panneau

7. Module (105) de train d'atterrissage **caractérisé en ce qu'**il comporte un train d'atterrissage (110) et un ensemble de protection selon l'une quelconque des revendications 1 à 6, le panneau de protection (115) étant situé à l'arrière du train d'atterrissage

8. Aéronef, **caractérisé en ce qu'**il comporte au moins un module (105) de train d'atterrissage selon la revendication 7.

## Patentansprüche

1. Schutzanordnung für Fahrzeuge, umfassend ein Schutzpaneel (115), einen Träger (135), der mit der Struktur des Fahrzeugs verbunden ist, sowie verformbare Teile (125), mittels derer das Schutzpaneel an dem Träger angebracht ist, **dadurch gekennzeichnet, dass** die Außenfläche (140) des Schutzpaneels (115) wenigstens einen Verbundwerkstoff umfasst und dass, da die verformbaren Teile (125) an mehreren Versteifungsteilen (145) des Trägers angreifen, der Verformungsgrad der verformbaren Teile dem Bruchdehnungskoeffizienten der Außenfläche angepasst ist, damit mehrere verformbare Teile sich verformen, bevor die Außenfläche bricht.

2. Schutzanordnung nach Anspruch 1, **dadurch gekennzeichnet, dass** die verformbaren Teile (125) an mehreren Rahmen angreifen.

3. Schutzanordnung nach einem der Ansprüche 1 oder 2, **dadurch gekennzeichnet, dass** die verformbaren Teile (125) an mehreren von Rahmen getragenen Leisten angreifen.

4. Schutzanordnung (115) nach einem der Ansprüche 1 bis 3, **dadurch gekennzeichnet, dass** der Verbundwerkstoff CFRP (Akronym von "carbon fibre reinforced plastic" für kohlenstofffaserverstärkten Kunststoff) ist.

5. Schutzanordnung nach einem der Ansprüche 1 bis 4, **dadurch gekennzeichnet, dass** die verformbaren Teile (125) eine zu der Außenfläche (140) parallele Basis und einen senkrecht zu der Basis, von dieser weg verlaufenden Teil umfassen.

6. Schutzanordnung nach einem der Ansprüche 1 bis 4, **dadurch gekennzeichnet, dass** die verformbaren Teile (125) eine zu der Außenfläche parallele Basis und einen senkrecht zu der Basis, von dieser weg verlaufenden Teil umfassen und dazu ausgelegt sind, unter der Wirkung von Aufschlägen auf die Außenfläche des Paneels einzuknicken.

7. Fahrwerksmodul (105), **dadurch gekennzeichnet, dass** es ein Fahrwerk (110) sowie eine Schutzanordnung nach einem der Ansprüche 1 bis 6 umfasst, wobei das Schutzpaneel (115) sich am hinteren Teil des Fahrwerks befindet.

8. Luftfahrzeug, **dadurch gekennzeichnet, dass** es wenigstens ein Fahrwerksmodul (105) nach Anspruch 7 umfasst.

## Claims

1. Protective assembly for a vehicle comprising a protective panel (115), a support (135) linked to the structure of the vehicle and deformable parts (125), by means of which the protective panel is mounted on the support, **characterized in that** the outer surface (140) of the protective panel (115) comprises at least one composite material and **in that** the deformable parts (125) being attached to several stiffening parts (145) of said support, the deformation rate of said deformable parts is adapted to the coefficient of elongation at break of the outer surface so that several said deformable parts become deformed before the outer surface breaks.

2. Protective assembly according to claim 1, **characterized in that** the said deformable parts (125) are born by several frames.

3. Protective assembly according to any one of claims 1 or 2, **characterized in that** the said deformable parts (125) are born by several stringers supported by frames.

4. Protective assembly (115) according to any one of claims 1 to 3, **characterized in that** the said composite material is made of CFRP (acronym for "*carbon fiber reinforced plastic*").

5. Protective assembly according to any one of claims 1 to 4, **characterized in that** the deformable parts (125) comprise a base parallel to the outer surface (140) and a portion extending perpendicular to the base and remote thereof.

6. Protective assembly according to any one of claims 1 to 4, **characterized in that** the deformable parts (125) comprise a base parallel to the outer surface (140) and a portion extending perpendicular to the base and remote thereof and are adapted to buckle under influence of impacts on the outer surface of the panel.

7. Landing gear module (105) **characterized in that** it comprises a landing gear (110) and a protective assembly according to any one of claims 1 to 6, the protective panel (115) being located at the back of the landing gear.

8. Aircraft, **characterized in that** it comprises at least one landing gear module (105) according to claim 7.
